# EUROPEAN PATENT SPECIFICATION

(11) **EP 1 092 377 B1**
(45) Date of publication and mention of the grant of the patent: **14.09.2005**
(21) Application number: 00203548.3
(22) Date of filing: 12.10.2000
(51) Int. Cl.: A47J 31/06, A47J 31/46

(54) **Apparatus for preparing a coffee extract with a fine-bubble froth layer**
Gerät zum Zubereiten einer Kaffeeinfusion mit einer dünnen Schaumschicht
Appareil pour préparer une extraction de café avec une fine couche de mousse

(30) Priority: 12.10.1999 NL 1013270
(43) Date of publication of application: 18.04.2001
(73) Proprietor: Sara Lee/DE N.V., 3532 AA Utrecht (NL)
(72) Inventor: Brouwer, Gustaaf Frans, 3862 KC Nijkerk (NL)
(74) Representative: Prins, Adrianus Willem

(56) References cited:
- EP-A- 0 682 902
- EP-A- 0 919 171
- CH-A- 596 810
- DE-A- 4 037 366
- NL-C- 1 006 039

## Description

The invention relates to an apparatus for preparing a coffee extract with a fine-bubble froth layer, the apparatus being provided with a hot water unit for dispensing hot water, at least one outlet for dispensing the coffee extract with the fine-bubble froth layer, and a liquid flow path extending from the hot water unit to the outlet, the apparatus being further provided with a container for receiving ground coffee, a nozzle comprising an inlet, at least one spout opening and a liquid flow channel extending from the inlet to the spout opening and a buffer reservoir, the container, the nozzle and the buffer reservoir being respectively arranged in succession in the liquid flow path, hot water, in use, being supplied by the hot water unit to the container for obtaining a coffee extract which is supplied to the inlet of the nozzle for generating a jet of coffee extract which spouts from the spout opening into the buffer reservoir, thus forming a thin layer of coffee extract in the buffer reservoir so that the jet of coffee extract spouts into the layer of coffee extract for obtaining the fine-bubble froth layer, and the coffee extract with the fine-bubble froth layer flows out of the buffer reservoir to the outlet for dispensing the coffee extract with the fine-bubble froth layer, the buffer reservoir being provided with at least one outlet opening for draining the buffer reservoir, the magnitude of the outlet opening and the amount of hot water being dispensed per unit of time by the hot water unit being adjusted to each other, such that, in use, the layer of coffee extract is formed in the buffer reservoir.

Such an apparatus is known inter alia from the Dutch patent application 1006039. The known apparatus is provided with two spout openings, spouting two jets of coffee extract into the buffer reservoir. Thus, the buffer reservoir is filled with the coffee extract. This entails that the jets of coffee extract spout into the liquid surface of a buffer reservoir, thus forming a fine-bubble froth layer. Subsequently, the coffee extract with the fine-bubble froth layer flows from the buffer reservoir to an outlet of the apparatus. The buffer reservoir is located at some distance from the outlet, more specifically such that it is located in the liquid flow path extending from the spout opening of the nozzle to the outlet of the apparatus.

The object of the invention is to improve the apparatus of the kind described in the preamble, such that at all times a stable fine-bubble froth layer is obtained on top of the coffee. What is meant by stable in this context is a continuous froth layer which remains intact for at least five minutes. The invention is based on the insight that if a jet is disturbed and therefore is not clear, a non-stable froth layer is formed which, most often, breaks up within five minutes, and is no longer continuous. Such a froth layer is even described as being unappetizing by some. According to the insight of the invention, the instability of the froth layer is mainly caused by the formation of larger bubbles which soon break up and thus cause the entire froth layer to dissolve rapidly.

To that end, the apparatus according to the invention is characterized in that the magnitude of a surface of a cross section of the liquid flow channel increases in the direction from the inlet to the spout opening.

Furthermore, the apparatus is based on the insight that a contact between a jet of coffee extract through the liquid flow channel and an inner wall of this liquid flow channel can yield a disturbance and hence a clouding of the exiting jet. By enlarging the magnitude of the surface of a cross section of the liquid flow channel in a direction from the inlet to the spout opening, this contact is wholly or at least sufficiently avoided in order to prevent disturbance of the outflowing liquid jet. By applying the invention, no disturbance of the jet occurs (it remains clear), so that a fine-bubble froth layer without large bubbles is formed, which remains stable for hours and even days.

Preferably, the nozzle is manufactured of a rigid material. This further reduces the chance of a disturbance of the jet and hence a jet unstable in form and direction. This is probably caused by the fact that when a rigid material such as hard plastic and a metal is applied, the surface of the nozzle which, in use, is in contact with the coffee extract flowing through the nozzle can be of very smooth design.

It is preferred that the magnitude of the surface of the cross section increases over at least virtually the full length of the liquid flow channel.

According to a practical variant, the liquid flow channel will have a circular cross section. The magnitude of a diameter of the liquid flow channel will increase over at least virtually the full length of the liquid flow channel in the direction from the inlet to the spout opening.

More in particular, an inner wall of the liquid flow channel has at least substantially the shape of a conical surface. An angle enclosed by the conical surface can, for instance, be 10-30°.

The invention will now be further elucidated on the basis of the drawing. In the drawing:
Fig. 1a shows a side view of an apparatus according to the invention;
Fig. 1b shows in perspective a view of a container receiving unit of the apparatus according to Fig. 1a;
Fig. 1c shows a top plan view of the container receiving unit according to Fig. 1b;
Fig. 1d shows a cross section of the container receiving unit along line 1d of Fig. 1a;
Fig. 1e shows a cross section of the container receiving unit along line 1e of Fig. 1c;
Fig. 2a shows a container receiving unit positioned in use in the chamber according to Fig. 1a;
Fig. 2b shows a cross section of the container receiving unit along the line 2b of Fig. 2a;
Fig. 2c shows a detail of an encircled part of Fig. 2b;
Fig. 3a shows a nozzle of the container according to Figs. 2a-2c;
Fig. 3b shows a top view and a bottom view of the nozzle according to Fig. 3a; and
Fig. 3c shows a cross section along the line 3c in Fig. 3b.

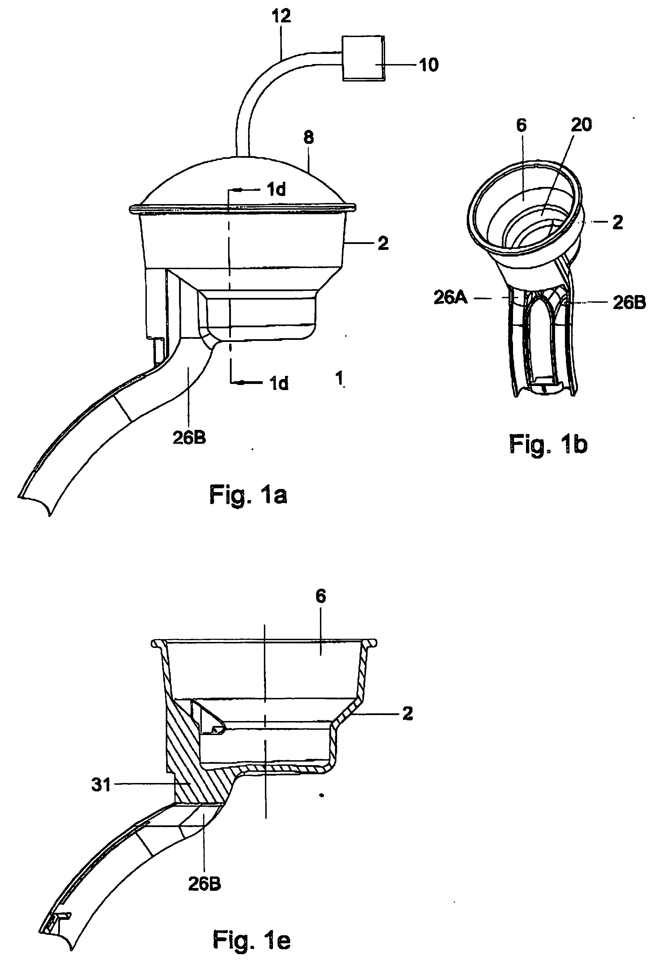

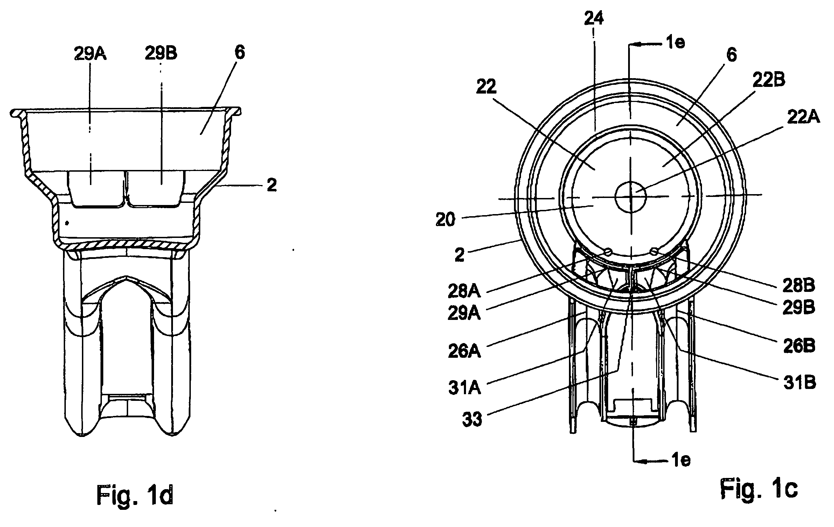

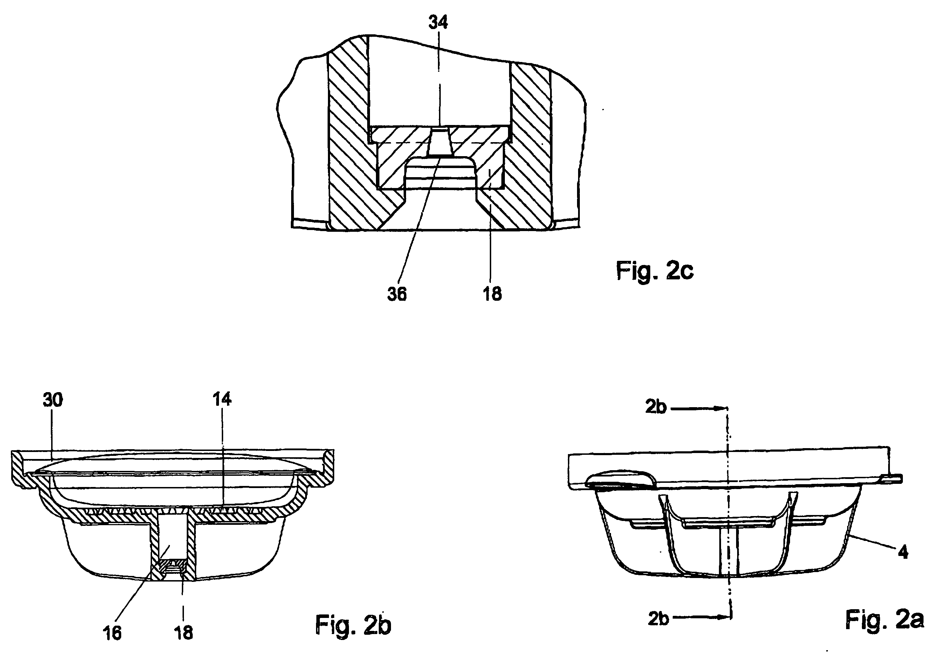

Fig. 1a shows, with reference numeral 1, an apparatus for preparing a coffee extract with a fine-bubble froth layer. The apparatus is provided with a container receiving unit 2, in which a removable container 4, as shown in Fig. 2a, is received. In Fig. 1b, in perspective view, the container receiving unit 2 is shown. As is apparent from this Figure, the container receiving unit 2 is provided with a receiving space 6, in which, during use, the container 4 can be received.

The apparatus is further provided with a removable lid 8, with which the container receiving unit 2 can be closed when the container 4 is positioned in the receiving space 6. Furthermore, the apparatus comprises a hot water unit 10 arranged to supply hot water via a hose 12 to the receiving space 6 which is closed by the lid 8.

The container 4 is arranged to be filled with ground coffee. In this example, the container is provided with a bottom on which a sachet filled with ground coffee can be placed. However, it is also possible to fill the container with coffee in a different manner. The bottom can for example be designed as a filtering plate known per se on which the ground coffee can be poured loosely.

The bottom is further provided with an outflow opening 16, in which a nozzle 18 is arranged. The nozzle is made of a rigid material. In this regard, for instance, a hard plastic or a metal can be considered.

The container receiving unit 2 is further provided with a buffer reservoir 20 having, in top plan view, a substantially convex bottom 22 and upright side walls 24. Near to the centre of the bottom however, the bottom has a substantially flat shape. The flat part of the bottom is indicated in Fig. 1c with reference numeral 22a, while the convex part is indicated with reference numeral 22b. In this example, at the bottom of the receiving space 6, under the bottom 22 of the buffer reservoir 20, two outlets 26a and 26b are present for discharging the coffee extract with the fine-bubble froth layer (see Fig. 1c). Further, in the bottom 22 of the buffer reservoir, two more openings 28a and 28b are provided. These openings 28a and 28b are at a low, and in this example a lowest, level of the bottom 22 convex in top plan view. The container 4, the nozzle 18 and the buffer reservoir 20 are therefore in succession incorporated in series in a liquid flow path extending from the hot water unit 10 to the outlets 26a, 26b. The apparatus described up to this point functions as follows.

The user removes the lid 8 and takes the container 4 from the container receiving unit 2. Subsequently, in the container 4 a sachet filled with ground coffee is received. For a further possible embodiment of the container, reference is made to European patent application no. 98201517.4 (Café crème holder). Then, the container is re-placed in the container receiving space and the container receiving space is closed with the lid 8. After this, the hot water unit 10 will supply hot water to the receiving space 6 via the hose 12. The pressure occurring here can, for instance, be about 0.4 bar. The hot water is thus pressed through the sachet (the sachet is schematically represented in Fig. 2b and is indicated with reference numeral 30). Then, in the sachet 30, coffee extract is formed. This coffee extract will leave the bottom side of the sachet and flow along the bottom to the outflow opening 16. In the outflow opening 16, the coffee extract flows on to the nozzle 18. The nozzle 18 enables the coffee extract to spout out of the nozzle 18. Thus, from the spout opening, a jet of coffee extract is generated, spouting into the buffer reservoir 20 and first striking the flat part 22a of the bottom 22. Since this portion is flat, the buffer reservoir will then, evenly distributed over the bottom 22, be filled with coffee extract. This yields a uniform froth formation. As a result, a thin layer of coffee extract will be formed in the buffer reservoir 20. The jet of coffee extract therefore spouts onto the liquid surface of the coffee extract already present in the buffer reservoir. As a result, a fine-bubble froth layer is formed. Thus, the buffer reservoir is filled with coffee extract with a fine-bubble froth layer. When the buffer reservoir is sufficiently filled, it will proceed to empty through two outflow openings 29a and 29b, arranged in the side wall 24 of the buffer reservoir, with a lowest point of the outflow openings being located above the level of the bottom adjacent the side wall. The minimum level of the coffee extract in the buffer reservoir at which the buffer reservoir will start to empty through the outflow openings 29a and 29b is therefore determined by the level of the lowest point of the outlet openings 29a and 29b. The coffee extract thus flowing out of the buffer reservoir will flow to a position at the bottom of the receiving unit 2. This position is under the bottom 22 of the buffer reservoir. At the bottom of the receiving unit, as mentioned, outlets 26a and 26b are arranged through which the coffee extract with a fine-bubble froth layer will leave the container receiving unit 2 to be received, for instance, in one or two cups, respectively.

A space 31 under the buffer reservoir is divided in two identical parts 31a and 32b by means of an upright partition 32, the space 31a being in fluid communication with the outlet 26a of the receiving unit, and the space 32b being in fluid communication with the outlet 26b of the receiving unit. The coffee extract flowing through outflow opening 29a to the space 31a will leave the receiving unit through the outlet 26a. The coffee extract flowing through the outflow opening 29b to the area 31b will leave the receiving unit through the outlet 26b.

When the desired amount of water has been supplied to the sachet 30, the hot water unit 10 is switched off. The remaining amount of coffee extract still present in the buffer reservoir 20 then flows out of the buffer reservoir through outflow openings 29a and 29b, and finally the remainder through the outlet openings 28a and 28b. The outlet openings 28a and 28b have such small dimensions that, in use, the buffer reservoir will be filled with coffee extract. In use, therefore, the amount of coffee extract supplied per unit of time to the buffer reservoir is larger than the amount of coffee extract leaving the buffer reservoir per unit of time through the openings 28a and 28b. To this end, the magnitude of the outlet openings 28a and 28b and the amount of water dispensed per unit of time by the hot water unit are adjusted to each other, such that, in use, the layer of coffee extract mentioned is formed in the buffer reservoir.

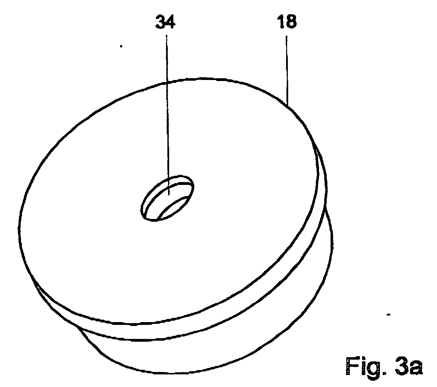

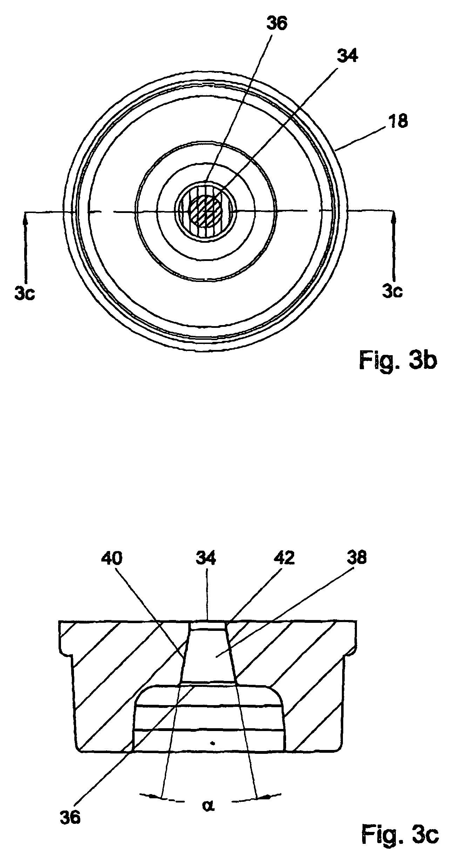

The nozzle 18 is provided with an inlet 34 (Fig. 2c and Fig. 3) and a spout opening 36. Between the inlet 34 and the spout opening 36, a liquid flow channel 38 is formed comprising inner walls 40. As can be properly seen in Fig. 3c, the magnitude of a surface of a cross section of the liquid flow channel increases in a direction from the inlet to the spout opening. In this example, the magnitude of the surface of the cross section even increases over at least practically the full length of the liquid flow channel. It is only near inlet 34 that, over a relatively short path, the magnitude of the cross section of the inlet 34 does not increase in the direction of the spout opening 36. In Fig. 3c, this path is indicated with reference numeral 42. Preferably, this path is as small as possible and even equal to zero.

Therefore, also variants where the path has a length equal to zero fall within the invention. It is also possible that the spout opening 36 is located at the point in Fig. 3c where the path 42 merges into the path 40.

When the coffee extract is supplied to the inlet 34, this will have as a consequence, as a result of the small dimensions of the inlet 34, that adjacent to inlet 34, the jet of coffee extract is formed. The diameter of the jet of coffee extract thus formed at the inlet 34 will increase gradually downstream of the inlet 34. What is accomplished in that, as stated, the magnitude of the surface of a cross section of the liquid flow channel increases in a direction from the inlet to the spout opening 36, is that the jet of coffee extract will hardly, if at all, come into contact with the side walls 40 of the liquid flow channel 18. What is thereby accomplished, surprisingly, is that the jet of coffee extract will not be disturbed at any moment and will be clear, with the result that a stable, fine-bubble froth layer is formed in the buffer reservoir. A disturbance of the jet, accordingly, results in, inter alia, a change of direction of the jet and a decrease of its clearness. In this example, the liquid flow channel has a circular cross section, the magnitude of a diameter of the liquid flow channel increasing over at least practically the full length of the liquid flow channel in the direction from the inlet 34 to the spout opening 36. However, it is also conceivable that the cross section is not circular but, for instance, n-angular (where n is an integer greater than or equal to 3), oval or differently shaped.

In this example, the inner wall 40 of the liquid flow channel 38 has, at least substantially, the shape of a conical surface. An angle α enclosed by the conical surface (see Fig. 3) is preferably 10-30°. In this example, α is approximately equal to 20°.

Preferably, the magnitude of the surface of the cross section of the liquid flow channel near the inlet is 0.05-2 mm². This surface is obliquely hatched in Fig. 3b. Furthermore, preferably, the magnitude of the surface of the cross section of the liquid flow channel adjacent the spout opening is approximately 1-2 mm² larger than the magnitude of the surface of the cross section of the liquid flow channel adjacent the inlet. In Fig. 3b, the surface of the cross section of the liquid flow channel is indicated with vertical hatching.

Another way of indicating the preferred dimensions of the liquid flow channel 38 is that the diameter of the liquid flow channel near the inlet is preferably 0.3-1.5 mm. In that case, the diameter of the liquid flow channel adjacent the spout opening is preferably 0.4-1.2 mm larger than the diameter of the liquid flow channel adjacent the inlet. The length of the liquid flow channel 38 can vary from, for instance, 0.1 to 25 mm. Downstream of the spout opening 36, the diameter increases further, in this example to 3.5 mm.

The increase of the cross section (widening) in the direction of the outflow opening serves to remove drops of liquid which can also disturb the jet of liquid. At a diameter of less than 2.5 mm, adhesion can occur between the coffee extract and the wall, which is made, for example, of polypropylene. In any case, this possible problem does not arise with diameters of over 2.5 mm, such as 3.5 mm here.

In this example, the nozzle 18 is exchangeably arranged in the receiving unit 4.

The invention is not limited in any way to the embodiments outlined hereinabove. The hot water unit 10 can, for example, be designed as a Napolitana-unit, such as it is described in Dutch patent application 1006039.

The buffer reservoir 20 can also be omitted. In that case, a bottom of the container receiving unit 2, that is to say, a bottom of the receiving space 6, in which openings are arranged of the outlets 26a and 26b, forms a buffer reservoir, in which, in use, a layer of coffee extract will be formed when the respective openings of the outlets 26a and 26b have a sufficiently small cross section. Then the outlets 26a and 26b correspond also functionally to the outlet openings 28a and 28b of the buffer reservoir 20. In effect, a buffer reservoir having outlet openings is formed again. The fine-bubble froth layer so formed will generally be of lesser quality than when use is made of the buffer reservoir 20 which is included in the liquid flow path from the nozzle to the outlets 26a and 26b.

Such variants are all understood to fall within the scope of the invention.

## Claims

1. An apparatus (1) for preparing a coffee extract with a fine-bubble froth layer, the apparatus being provided with a hot water unit (10) for dispensing hot water, at least one outlet (26a,26b) for dispensing the coffee extract with the fine-bubble froth layer, and a liquid flow path extending from the hot water unit (10) to the outlet, the apparatus being further provided with a container (4) for receiving ground coffee, a nozzle (18) comprising an inlet (34), at least one spout opening (36) and a liquid flow channel (38) extending from the inlet to the spout opening and a buffer reservoir (20), the container, the nozzle and the buffer reservoir being arranged in succession in the liquid flow path, hot water, in use, being supplied by the hot water unit (10) to the container (4) for obtaining a coffee extract which is supplied to the inlet (34) of the nozzle (18) for generating a jet of coffee extract which spouts from the spout opening (36) into the buffer reservoir (20), thus forming a thin layer of coffee extract in the buffer reservoir so that the jet of coffee extract spouts into the layer of coffee extract for obtaining the fine-bubble froth layer, and the coffee extract with the fine-bubble froth layer flowing out of the buffer reservoir to the outlet (26a,26b) for dispensing the coffee extract with the fine-bubble froth layer, the buffer reservoir being provided with at least one outlet opening (28a,28b) for draining the buffer reservoir, the magnitude of the outlet opening and the amount of hot water being dispensed per unit of time by the hot water unit (10) being adjusted to each other, such that, in use, the layer of coffee extract is formed in the buffer reservoir (20), **characterized in that** the magnitude of a surface of a cross section of the liquid flow channel increases in a direction from the inlet (34) to the spout opening (36).

2. An apparatus (1) according to claim 1, **characterized in that** the magnitude of the surface of the cross section increases over at least practically the full length of the liquid flow channel (38).

3. An apparatus (1) according to claim 1, **characterized in that** the liquid flow channel (38) comprises a circular cross section, the magnitude of a diameter of the liquid flow channel increasing over at least practically the full length of the liquid flow channel in the direction from the inlet (34) to the spout opening (36).

4. An apparatus (1) according to claim 2 or 3, **characterized in that** an inner wall (40) of the liquid flow channel (38) has, at least substantially, the shape of a conical surface.

5. An apparatus (1) according to claim 4, **characterized in that** an angle enclosed by the conical surface is 10-30°.

6. An apparatus (1) according to claim 5, **characterized in that** the angle enclosed by the conical surface is approximately 20°.

7. An apparatus (1) according to any one of the preceding claims, **characterized in that** the magnitude of the surface of the cross section of the liquid flow channel (38) adjacent the inlet (34) does not increase in a direction from the inlet to the spout opening (36).

8. An apparatus (1) according to any one of the preceding claims, **characterized in that** the magnitude of the surface of the cross section of the liquid flow channel (38) adjacent the inlet (34) is 0.05-2 mm².

9. An apparatus (1) according to any one of the preceding claims, **characterized in that** the magnitude of the surface of the cross section of the liquid flow channel (38) adjacent the spout opening (36) is approximately 1-2 mm² larger than the magnitude of the surface of the cross section of the liquid flow channel adjacent the inlet (34).

10. An apparatus (1) according to any one of the preceding claims, **characterized in that** the diameter of the liquid flow channel (38) adjacent the inlet (34) is 0.3-1.5 mm.

11. An apparatus (1) according to any one of the preceding claims, **characterized in that** the diameter of the liquid flow channel (38) adjacent the spout opening (36) is approximately 0.4-1.2 mm greater than the diameter of the liquid flow channel adjacent the inlet (34).

12. An apparatus (1) according to any one of the preceding claims, **characterized in that** the length of the liquid flow channel (38) is 5-25 mm.

13. An apparatus (1) according to any one of the preceding claims, **characterized in that** the container (4) is removably arranged, the container being provided with a bottom with an outflow opening (16) in which the nozzle (18) is received.

14. An apparatus (1) according to any one of the preceding claims, **characterized in that** the nozzle (18) is manufactured from a rigid material.

## Patentansprüche

1. Eine Vorrichtung (1) zur Zubereitung eines Kaffeeextrakts mit einer feinblasigen Schaumschicht, wobei die Vorrichtung eine Heißwassereinheit (10) zur Abgabe von Heißwasser, wenigstens einen Auslass (26a, 26b) zur Abgabe des Kaffeeextrakts mit der feinblasigen Schaumschicht und einen Flüssigkeitsströmungsweg aufweist, der sich von der Heißwassereinheit (10) zum Auslass erstreckt, wobei die Vorrichtung ferner mit einem Behälter (4) zur Aufnahme von gemahlenem Kaffee, einer Düse (18), die einen Einlass (34), wenigstens eine Ausgussöffnung (36) und einen Flüssigkeitsströmungskanal (38), der sich vom Einlass zur Ausgussöffnung erstreckt, umfasst und mit einem Pufferreservoir versehen ist, wobei der Behälter, die Düse und das Pufferreservoir in Abfolge im Flüssigkeitsströmungsweg angeordnet sind, wobei das Heißwasser im Betrieb durch die Heißwassereinheit (10) dem Behälter (4) zugeführt wird für den Erhalt eines Kaffeeextrakts, das dem Einlass (34) der Düse (18) für die Erzeugung eines Strahls aus dem Kaffeeextrakt zugeführt wird, wobei der Strahl aus der Ausgussöffnung (36) in das Pufferreservoir (20) spritzt und somit eine dünne Schicht des Kaffeeextrakts im Pufferreservoir gebildet wird, so dass der Strahl aus dem Kaffeeextrakt in die Schicht aus Kaffeeextrakt spritzt, um eine feinblasige Schaumschicht zu erhalten, und wobei das Kaffeeextrakt mit der feinblasigen Schaumschicht aus dem Pufferreservoir zum Auslass (26a, 26b) für die Abgabe des Kaffeeextrakts mit der feinblasigen Schaumschicht strömt, wobei das Pufferreservoir mit einer Auslassöffnung (28a, 28b) für den Abfluss aus dem Pufferreservoir versehen ist, wobei das Maß der Auslassöffnung und die Menge an Heißwasser, die pro Zeiteinheit von der Heißwassereinheit (10) abgegeben wird, so aufeinander abgestimmt sind, dass im Betrieb die Schicht aus Kaffeeextrakt im Pufferreservoir (20) gebildet wird, **dadurch gekennzeichnet, dass** das Flächenmaß eines Querschnitts des Flüssigkeitsströmungskanals in einer Richtung vom Einlass (34) zur Ausgussöffnung (36) zunimmt.

2. Vorrichtung (1) gemäß Anspruch 1, die **dadurch gekennzeichnet ist, dass** das Flächenmaß des Querschnitts über wenigstens so gut wie die gesamte Länge des Flüssigkeitsströmungskanals (38) zunimmt.

3. Vorrichtung (1) gemäß Anspruch 1, die **dadurch gekennzeichnet ist, dass** der Flüssigkeitsströmungskanal (38) einen kreisförmigen Querschnitt aufweist, dass das Durchmessermaß des Flüssigkeitsströmungskanals über wenigstens so gut wie die gesamte Länge des Flüssigkeitsströmungskanals in der Richtung vom Einlass (34) zur Ausgussöffnung (36) zunimmt.

4. Vorrichtung (1) gemäß Anspruch 2 oder 3, die **dadurch gekennzeichnet ist, dass** eine Innenwand (40) des Flüssigkeitsströmungskanals (38) wenigstens im Wesentlichen die Formgebung einer konischen Fläche aufweist.

5. Vorrichtung (1) gemäß Anspruch 4, die **dadurch gekennzeichnet ist, dass** ein von der konischen Fläche eingeschlossener Winkel 10 - 30° beträgt.

6. Vorrichtung (1) gemäß Anspruch 5, die **dadurch gekennzeichnet ist, dass** der von der konischen Fläche eingeschlossene Winkel ungefähr 20° beträgt.

7. Vorrichtung (1) gemäß einem der vorhergehenden Ansprüche, die **dadurch gekennzeichnet ist, dass** das Flächenmaß des Querschnitts des an den Einlass (34) angrenzenden Flüssigkeitsströmungskanals (38) nicht in einer Richtung vom Einlass zur Ausgussöffnung (36) zunimmt.

8. Vorrichtung (1) gemäß einem der vorhergehenden Ansprüche, die **dadurch gekennzeichnet ist, dass** das Flächenmaß des Querschnitts des an den Einlass (34) angrenzenden Flüssigkeitsströmungskanals (38) 0,05 - 2 mm² beträgt.

9. Vorrichtung (1) gemäß einem der vorhergehenden Ansprüche, die **dadurch gekennzeichnet ist, dass** das Flächenmaß des Querschnitts des an die Ausgussöffnung (36) angrenzenden Flüssigkeitsströmungskanals (38) etwa 1 - 2 mm² größer als das Flächenmaß des Querschnitts des an den Einlass (34) angrenzenden Flüssigkeitsströmungskanals ist.

10. Vorrichtung (1) gemäß einem der vorhergehenden Ansprüche, die **dadurch gekennzeichnet ist, dass** der Durchmesser des an den Einlass (34) angrenzenden Flüssigkeitsströmungskanals (38) 0,3 - 1,5 mm beträgt.

11. Vorrichtung (1) gemäß einem der vorhergehenden Ansprüche, die **dadurch gekennzeichnet ist, dass** der Durchmesser des an die Ausgussöffnung (36) angrenzenden Flüssigkeitsströmungskanals (38) etwa 0,4 - 1,2 mm größer als der Durchmesser des an den Einlass (34) angrenzenden Flüssigkeitsströmungskanals ist.

12. Vorrichtung (1) gemäß einem der vorhergehenden Ansprüche, die **dadurch gekennzeichnet ist, dass** die Länge des Flüssigkeitsströmungskanals (38) 5 - 25 mm beträgt.

13. Vorrichtung (1) gemäß einem der vorhergehenden Ansprüche, die **dadurch gekennzeichnet ist, dass** der Behälter (4) entnehmbar angeordnet ist, wobei der Behälter mit einem Boden mit eines Ausflussöffnung (16) versehen ist, die die Düse (18) aufnimmt.

14. Vorrichtung (1) gemäß einem der vorhergehenden Ansprüche, die **dadurch gekennzeichnet ist, dass** die Düse (18) aus einem steifen Material hergestellt ist.

## Revendications

1. Appareil (1) pour préparer un extrait de café avec une couche de mousse à fines bulles, l'appareil étant muni d'une unité d'eau chaude (10) pour distribuer de l'eau chaude, d'au moins un orifice de sortie (26a, 26b) pour distribuer l'extrait de café avec la couche de mousse à fines bulles, et d'un circuit d'écoulement de liquide s'étendant depuis l'unité d'eau chaude (10) jusqu'à l'orifice de sortie, l'appareil étant en outre muni d'un conteneur (4) pour recevoir le café moulu, d'une tuyère (18) comprenant un orifice d'entrée (34), d'au moins une ouverture formant bec (36) et d'un canal d'écoulement de liquide (38) s'étendant depuis l'orifice d'entrée jusqu'à l'ouverture formant bec et d'un réservoir tampon (20), le conteneur, la tuyère et le réservoir tampon étant disposés en succession dans le circuit d'écoulement de liquide, l'eau chaude, lors de l'utilisation, étant fournie par l'unité d'eau chaude (10) au conteneur (4) pour obtenir un extrait de café qui est fourni à l'orifice d'entrée (34) de la tuyère (18) pour engendrer un jet d'extrait de café qui jaillit de l'ouverture formant bec (36) dans le réservoir tampon (20), formant ainsi une mince couche d'extrait de café dans le réservoir tampon de telle sorte que le jet d'extrait de café jaillit dans la couche d'extrait de café pour obtenir la couche de mousse à fines bulles, et l'extrait de café avec la couche de mousse à fines bulles s'écoulant du réservoir tampon vers l'orifice de sortie (26a, 26b) pour distribuer l'extrait de café avec la couche de mousse à fines bulles, le réservoir tampon étant muni d'au moins une ouverture formant orifice de sortie (28a, 28b) pour vider le réservoir tampon, la grandeur de l'ouverture formant orifice de sortie et la quantité d'eau chaude distribuée par unité de temps par l'unité d'eau chaude (10) étant ajustées l'une par rapport à l'autre, de telle sorte que, lors de l'utilisation, la couche d'extrait de café soit formée dans le réservoir tampon (20), **caractérisé en ce que** la grandeur d'une surface d'une coupe transversale du canal d'écoulement de liquide augmente dans une direction allant de l'orifice d'entrée (34) à l'ouverture formant bec (36).

2. Appareil (1) selon la revendication 1, **caractérisé en ce que** la grandeur de la surface de la coupe transversale augmente sur au moins pratiquement toute la longueur du canal d'écoulement de liquide (38).

3. Appareil (1) selon la revendication 1, **caractérisé en ce que** le canal d'écoulement de liquide (38) comprend une coupe transversale circulaire, la grandeur d'un diamètre du canal d'écoulement de liquide augmentant sur au moins pratiquement toute la longueur du canal d'écoulement de liquide dans la direction allant de l'orifice d'entrée (34) à l'ouverture formant bec (36).

4. Appareil (1) selon la revendication 2 ou 3, **caractérisé en ce qu'**une paroi intérieure (40) du canal d'écoulement de liquide (38) présente, au moins sensiblement, la forme d'une surface conique.

5. Appareil (1) selon la revendication 4, **caractérisé en ce qu'**un angle compris dans la surface conique est compris entre 10 et 30°.

6. Appareil (1) selon la revendication 5, **caractérisé en ce que** l'angle compris dans la surface conique est de 20° environ.

7. Appareil (1) selon l'une quelconque des revendications précédentes, **caractérisé en ce que** la grandeur de la surface de la coupe transversale du canal d'écoulement de liquide (38) au voisinage immédiat de l'orifice d'entrée (34) n'augmente pas dans une direction allant de l'orifice d'entrée à l'ouverture formant bec (36).

8. Appareil (1) selon l'une quelconque des revendications précédentes, **caractérisé en ce que** la grandeur de la surface de la coupe transversale du canal d'écoulement de liquide (38) au voisinage immédiat de l'orifice d'entrée (34) est comprise entre 0,05 et 2 mm².

9. Appareil (1) selon l'une quelconque des revendications précédentes, **caractérisé en ce que** la grandeur de la surface de la coupe transversale du canal d'écoulement de liquide (38) au voisinage immédiat de l'ouverture formant bec (36) est plus grande de 1 à 2 mm² environ que la grandeur de la surface de la coupe transversale du canal d'écoulement de liquide au voisinage immédiat de l'orifice d'entrée (34).

10. Appareil (1) selon l'une quelconque des revendications précédentes, **caractérisé en ce que** le diamètre du canal d'écoulement de liquide (38) au voisinage immédiat de l'orifice d'entrée (34) est compris entre 0,3 et 1,5 mm.

11. Appareil (1) selon l'une quelconque des revendications précédentes, **caractérisé en ce que** le diamètre du canal d'écoulement de liquide (38) au voisinage immédiat de l'ouverture formant bec (36) est plus grand de 0,4 à 1,2 mm environ que le diamètre du canal d'écoulement de liquide au voisinage immédiat de l'orifice d'entrée (34).

12. Appareil (1) selon l'une quelconque des revendications précédentes, **caractérisé en ce que** la longueur du canal d'écoulement de liquide (38) est comprise entre 5 et 25 mm.

13. Appareil (1) selon l'une quelconque des revendications précédentes, **caractérisé en ce que** le conteneur (4) est agencé de manière amovible, le conteneur étant muni d'un fond comportant une ouverture d'écoulement (16) dans laquelle la tuyère (18) est reçue.

14. Appareil (1) selon l'une quelconque des revendications précédentes, **caractérisé en ce que** la tuyère (18) est réalisée dans un matériau rigide.
